# EUROPEAN PATENT APPLICATION

(11) **EP 2 881 497 A1**
(43) Date of publication of application: **10.06.2015**
(21) Application number: 13826113.6
(22) Date of filing: 30.05.2013
(51) Int. Cl.: C25D 3/46

(54) **ELECTROSILVER PLATING FLUID**

(30) Priority: 31.07.2012 JP 2012169982
(71) Applicant: Daiwa Fine Chemicals Co., Ltd., Akashi-shi Hyogo 674-0093 (JP)
(72) Inventor: HOSOKAWA,Yohei, Akashi City Hyogo 674-0093 (JP); HATA,Tomomi, Akashi City Hyogo 674-0093 (JP); YONE,Naoko, Akashi City Hyogo 674-0093 (JP); KADOKAWA,Toshifumi, Akashi City Hyogo 674-0093 (JP); SHIGEKUNI,Yuji, Akashi City Hyogo 674-0093 (JP); KITAMURA,Shingo, Akashi City Hyogo 674-0093 (JP); YOSHIMOTO,Masakazu, Akashi City Hyogo 674-0093 (JP)
(74) Representative: Goulard, Sophie
(86) International application number: PCT/JP2013/065048
(87) International publication number: WO 2014/020981

(57) **Abstract**

Provided is an electrosilver plating bath yielding a semiglossy to glossy appearance across a wide current density range without the use of a cyan compound, and a plating method using the electrosilver plating bath. An electrosilver plating fluid that is an aqueous solution containing (A) at least one soluble silver compound, (B) at least one benzoic acid derivative or a salt of the derivative, and (C) at least one acid and/or complexing agent, wherein the benzoic acid derivative is expressed by the following general formula (m is 1, 2, 3, 4 or 5; Ra is a carboxyl group; individual instances of Rb are selected independently from an aldehyde group, a carboxyl group, an amino group, a hydroxyl group, or a sulfonic acid group; individual instances of Rc are independently oxygen or any substituent; and one or more oxygen or CH₂ may be introduced into the bond between Ra or Rb and a benzene ring.

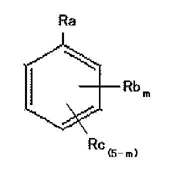

## Description

### [Technical Field]

The present invention relates to a cyanide-free silver electroplating solution which enables semi-glossy or glossy appearance, and a plating method using the same.

### [Background Art]

Silver plating has been used for a long time in decorative applications because of its beautiful white glossy appearance. Silver plating has also been used in industrial applications because of its excellent electrical conductivity, bonding properties, lubricity, and the like. However, almost all of silver plating operations are industrially performed using a cyanide bath containing a cyanide compound having high toxicity in a current state.

Various studies have hitherto been made concerning achievement of cyanide-free silver electroplating, and various compounds have been proposed so as to obtain satisfactory plating appearance.

For example, JP 11-343591 A discloses a silver plating bath of an aqueous acidic solution containing silver ions, oxalic acid ions, chloride ions, and sulfamic acid ions. JP 4-99890 A discloses a silver electroplating bath, characterized in that the concentration of silver in the silver electroplating bath is controlled within a range of 10 to 100 g/L and 20 to 200 g/L of citric acid is added in the silver electroplating bath. Furthermore, JP 3-61393 A discloses a silver plating method using an acidic silver complex salt as a main component, characterized in that an additive includes at least a nitrogen-containing carboxylic acid derivative, aldehyde, and a C=S-containing compound, in which a nicotinic acid compound is exemplified as the nitrogen-containing carboxylic acid derivative.

Other than those mentioned above, JP 8-104993 A discloses, as a silver electroplating method using no cyanide, a method in which a hydantoin compound is used as a complexing agent. The literature discloses the gist that an organic sulfur compound having a carboxyl group is used as a gloss adjusting agent. Furthermore, JP 2007-327127 A discloses a method in which phosphine is used as a complexing agent. The literature does not clearly discloses the gist that a compound having a carboxyl group is used, but teaches the gist that thiosalicylic acid is used as an agent for preventing substitution precipitation.

### [Citation List]

### [Patent Literature]

[Patent Literature 1]
   JP 11-343591 A
[Patent Literature 2]
   JP 4-99890 A
[Patent Literature 3]
   JP 3-61393 A
[Patent Literature 4]
   JP 8-104993 A
[Patent Literature 5]
   JP 2007-327127 A

### [Summary of Invention]

### [Technical Problem]

As mentioned above, numerous compounds having a carboxyl group are disclosed as an additive of a silver plating bath, however, the obtained plating film exhibits insufficient gloss even when using any disclosed plating baths. Because of narrow range of usable (applicable) current density, when an article having a complicated shape is subjected to plating, uneven gloss occurs due to large current deviation among positions of the article. The plating bathes disclosed above are inferior to a common cyanide bath. Therefore, these bathes are not industrially used, actually, and a cyanide bath having high toxicity is currently still in use mainly.

The present invention has been made in view of these problems, and provides a silver electroplating bath which enables semi-glossy to glossy plating appearance within a wide current density range without using a cyanide compound, and a plating method using the same.

### [Solution to Problem]

The present inventors have found that a semi-glossy or glossy plating film can be obtained within a wide current density range by using a silver electroplating solution which does not contain a cyanide compound and contains a specific benzoic acid derivative as a brightener, thus completing the present invention.

(1) The present invention thus completed based on the above finding provides, in an aspect, a silver electroplating solution which is an aqueous solution including:
   (A) at least one soluble silver compound,
   (B) at least one benzoic acid derivative or a salt of the derivative, and
   (C) at least one acid and/or complexing agent,
   wherein the benzoic acid derivative is represented by the following general formula I: 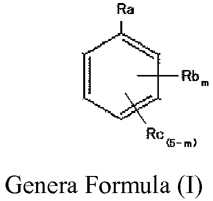 wherein
   m is 1, 2, 3, 4, or 5,
   Ra is a carboxyl group,
   Rb each is independently selected from an aldehyde group, a carboxyl group, an amino group, a hydroxyl group, or a sulfonic acid group,
   Rc each independently represents hydrogen or an optional substituent, and
   one or more oxygen(s) or CH₂ (s) may be introduced into the bond between Ra(s) or Rb and a benzene ring.
(2) The silver electroplating solution according to the present invention is, in another embodiment, the plating solution according to the above (1), which does not substantially contain a cyanide compound.
(3) The silver electroplating solution according to the present invention is, in another embodiment, the plating solution according to the above (1) or (2), which further contains at least one azole-based compound and/or thiophene-based compound.
(4) The silver electroplating solution according to the present invention is, in another embodiment, the plating solution according to any one of the above (1) to (3), which further contains at least one surfactant.
(5) The silver electroplating solution according to the present invention is, in another embodiment, the plating solution according to the above (4), wherein the surfactant is a nonionic surfactant.
(6) The silver electroplating solution according to the present invention is, in another embodiment, the plating solution according to any one of the above (1) to (5), wherein the total concentration of the benzoic acid derivative or a salt of the derivative is 0.0001 g/L or more.
(7) The silver electroplating solution according to the present invention is, in another embodiment, the plating solution according to the above (3), wherein the total concentration of the azole-based compound and/or thiophene-based compound is 0.01 g/L or more.
(8) The silver electroplating solution according to the present invention is, in another embodiment, the plating solution according to the above (4), wherein the total concentration of the surfactant is 0.001 g/L or more.
(9) The present invention provides, in an aspect, a silver electroplating method, which includes using the plating solution according to any one of the above (1) to (8).
(10) The present invention provides, in an aspect, a method for producing a silver electroplated product by using the plating solution according to any one of the above (1) to (8).
(11) The present invention provides, in an aspect, a silver electroplated product produced by using the plating solution according to any one of the above (1) to (8).
(12) The present invention provides, in an aspect, a method or plated product according to any one of the above (9) to (11), wherein silver electroplating is performed using the plating solution, followed by subjecting to any one or more of the following coating treatments:
   - a treatment for forming a film of an organic compound or a resin-based material;
   - a treatment for forming a film of metal other than silver; and
   - a treatment for forming a chromic acid chemical conversion film.

### [Advantageous Effects of Invention]

A cyanide-free silver electroplating solution of the present invention enables formation of a plating film having semi-glossy or glossy appearance within a wide current density range by containing, as a brightener, a certain specific benzoic acid derivative without requiring a cyanide compound. As a result, it becomes possible to apply to not only decorative applications which need beautiful appearance, but also functional applications which give great importance to regular reflection of light. As a matter of course, burden to workers and environments are significantly reduced since poisonous substances such as a cyanide compound are not required.

### [Description of Embodiments]

The silver plating solution of the present invention will be described in detail below.

### 1. Soluble Silver Compound

In a bath of the present invention, a soluble silver compound is used as a silver source. Examples thereof include, but are not limited to, silver chloride, silver bromide, silver iodide, silver oxide, silver carbonate, silver sulfate, silver methanesulfonate, silver alkanolsulfonate, silver phenolsulfonate, silver sulfamate, silver thiocyanate, silver thiosulfate, and the like. The concentration of these soluble silver compounds in a plating solution is suitably about 1 to 100 g/L, preferably 5 to 80 g/L, and more preferably 10 to 50 g/L, in terms of silver ions.

### 2. Benzoic Acid Derivative

The specific benzoic acid derivative used in the present invention significantly contributes to impart gloss to a silver plating film by exerting a strong action on a substrate surface at the time of silver plating to make the precipitated crystal fine and uniform. Moreover, use of the derivative makes it possible to apply current density within a wide range. The specific benzoic acid derivative refers to benzoic acid represented by the following general formula (I): 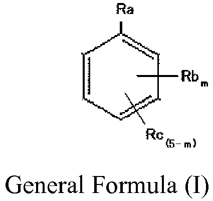 wherein
m is 1, 2, 3, 4, or 5,
Ra is a carboxyl group,
Rb each is independently selected from an aldehyde group, a carboxyl group, an amino group, a hydroxyl group, or a sulfonic acid group,
Rc each independently represents hydrogen or an optional substituent, and
one or more (typically 10 or less, 5 or less, or 3 or less) oxygen(s) or CH₂ (s) may be introduced into the bond between Ra(s) or Rb and a benzene ring.

Here, there is no particular limitation on Rc, and it is possible to be substituted with a hydrogen atom per se, or an optional substituent such as an alkyl group (having, for example, 10 or less, 5 or less, or 3 or less carbon atoms), an alkylaryl group, an acetyl group, a nitro group, a halogen group, or an alkoxy group (having, for example, 10 or less, 5 or less, or 3 or less carbon atoms). Regarding Rc, like Ra and Rb, one or more (typically 10 or less, 5 or less, or 3 or less) oxygen(s) or CH₂ (s) may be optionally introduced into the bond between a benzene ring and the substituent Rc.

The statement of the upper limit and/or lower limit of the above-mentioned number of carbon atoms is not intended to disclose only a specific critical value. In other words, individual integer included within a defined numerical value range is intended to be entirely disclosed. For example, the statement "having 10 or less carbon atoms" has the same meaning as that of "the number of carbon atoms is 0, 1, 2, 3, 4, 5, 6, 7, 8, 9, or 10". The same shall apply to the number of oxygen(s) or CH₂(s) which can be introduced into the bond between Ra(s) or Rb or Rc and a benzene ring. The number of oxygen(s) or CH₂(s), which can be introduced, is more preferably 0, 1, or 2, and most preferably 0.

Rb is preferably an amino group, a hydroxyl group, or a sulfonic acid group, and most preferably an amino group or a hydroxyl group.

Specific examples of the benzoic acid derivative include, but are not limited to, 4-aminobenzoic acid, 3,4-diaminobenzoic acid, 3,5-diaminobenzoic acid, 2-chloro-4-hydroxybenzoic acid, vanillic acid, isovanillic acid, salicylic acid, 5-iodosalicylic acid, 3,5-diiodosalicylic acid, 3-aminosalicylic acid, 4-aminosalicylic acid, 5-aminosalicylic acid, 4-chlorosalicylic acid, 3,5-tert-butylsalicylic acid, 5-sulfosalicylic acid, 3-methylsalicylic acid, 3-methoxysalicylic acid, 3-nitrosalicylic acid, 5-formylsalicylic acid, 3-amino-4-chlorobenzoic acid, 4-amino-3-hydroxybenzoic acid, 4-amino-5-chloro-2-ethoxybenzoic acid, 2-sulfobenzoic acid, 3-sulfobenzoic acid, 5-sulfobenzoic acid, 3-hydroxybenzoic acid, 4-hydroxybenzoic acid, 2,3-dihydroxybenzoic acid, 2,4-dihydroxybenzoic acid, 2,5-dihydroxybenzoic acid, 2,6-dihydroxybenzoic acid, 3,4-dihydroxybenzoic acid, 3,5-dihydroxybenzoic acid, 2,6-dihydroxy-4-methylbenzoic acid, 2,4,6-trihydroxybenzoic acid, pyrogallol-4-carboxylic acid, 3-hydroxy-4-nitrobenzoic acid, trimesic acid, anthranilic acid, 5-hydroxyanthranilic acid, 4,5-dimethoxyanthranilic acid, 3-chloroanthranilic acid, 2-amino-3-methoxybenzoic acid, 4-formylbenzoic acid, 5-hydroxyisophthalic acid, terephthalic acid, 5-sulfoisophthalic acid, 2-sulfoterephthalic acid, 5-methylisophthalic acid, 2,5-dimethylterephthalic acid, isophthalic acid, and the like. The benzoic acid derivative may be added in the form of an acid, or may be added in the form of a salt such as sodium, potassium, or ammonium thereof

Among the above-mentioned specific examples, the benzoic acid derivative is preferably salicylic acid, 3-aminosalicylic acid, 4-aminosalicylic acid, 5-aminosalicylic acid, 2-sulfobenzoic acid, 3-hydroxybenzoic acid, 4-hydroxybenzoic acid, 2,3-dihydroxybenzoic acid, 2,4-dihydroxybenzoic acid, 2,5-dihydroxybenzoic acid, anthranilic acid, 5-sulfoisophthalic acid, 4-formylbenzoic acid, terephthalic acid, and 5-methylisophthalic acid, more preferably salicylic acid, 5-aminosalicylic acid, 2-sulfobenzoic acid, 2,3-dihydroxybenzoic acid, and anthranilic acid, and most preferably salicylic acid and 5-aminosalicylic acid.

The plating solution may contain the benzoic acid derivative or salts thereof alone, or two or more of them can be used in combination. The total concentration of the benzoic acid derivative in the plating solution is suitably 0.0001 to 50 g/L, and more suitably 0.001 to 20 g/L. When the concentration in the plating solution is too low, the effect serving as a brightener is not exerted, and only rough silver plating appearance is obtained. Even when the concentration in the plating solution is too high, not only the effect reaches a peak that causes poor cost-effectiveness, but also the benzoic acid derivative is poorly soluble.

### 3. Azole-Based Compound and/or Thiophene-Based Compound

The plating bath of the present invention can further contain an azole-based compound and/or a thiophene-based compound. It is considered that these compounds serve as an auxiliary brightener for more enhancing gloss. Tetrazoles, imidazoles, benzimidazoles, pyrazoles, indazoles, thiazoles, benzothiazoles, oxazoles, benzoexazoles, triazoles, and derivatives thereof are suitably used as the azole compound.

Among these compounds, imidazoles, pyrazoles, indazoles, and triazoles are more suitably used, and triazoles are most suitably used. Compounds included in them are more specifically exemplified below.

Among imidazoles, imidazole, 1-methylimidazole, 1-phenylimidazole, 2-methylimidazole, 2-ethylimidazole, 2-propylimidazole, 2-butylimidazole, 2-phenylimidazole, 4-methylimidazole, 4-phenylimidazole, 2-aminoimidazole, 2-mercaptoimidazole, imidazole-4-carboxylic acid, benzimidazole, 1-methylbenzimidazole, 2-methylbenzimidazole, 2-ethylbenzimidazole, 2-butylbenzimidazole, 2-octylbenzimidazole, 2-phenylbenzimidazole, 2-trifluoromethylbenzimidazole, 4-methylbenzimidazole, 2-chlorobenzimidazole, 2-hydroxybenzimidazole, 2-aminobenzimidazole, 2-mercaptobenzimidazole, 2-methylthiobenzimidazole, 5-nitrobenzimidazole, benzimidazole-5-carboxylic acid, tris(2-benzimidazolylmethyl)amine, and 2,2'-tetra (or octa) methylene-dibenzimidazole are used, and imidazole, benzimidazole, tris(2-benzimidazolylmethyl)amine, and 2,2'-tetra (or octa) methylene-dibenzimidazole are more suitably used.

Among pyrazoles or indazoles, pyrazole, 3-methylpyrazole, 4-methylpyrazole, 3,5-dimethylpyrazole, 3-trifluoromethylpyrazole, 3-aminopyrazole, pyrazole-4-carboxylic acid, 4-bromopyrazole, 4-iodopyrazole, indazole, 5-aminoindazole, 6-aminoindazole, 5-nitroindazole, and 6-nitroindazole are suitably used, and pyrazole and 3-aminopyrazole are more suitably used.

Regarding specific examples of the above compounds other than imidazoles, pyrazoles, and indazoles, i.e. tetrazoles, thiazoles, benzothiazoles, oxazoles, benzooxazoles, and the like, it is possible to suitably use, as tetrazole and derivatives thereof, tetrazole, 5-aminotetrazole, 5-mercapto-1-methyltetrazole, 5-mercapto-1-phenyltetrazole, and the like; it is possible to suitably use, as thiazole or benzothiazole and derivatives thereof, thiazole, 4-methylthiazole, 5-methylthiazole, 4,5-dimethylthiazole, 2,4,5-trimethylthiazole, 2-bromothiazole, 2-aminothiazole, benzothiazole, 2-methylbenzothiazole, 2,5-dimethylbenzothiazole, 2-phenylbenzothiazole, 2-chlorobenzothiazole, 2-hydroxybenzothiazole, 2-aminobenzothiazole, 2-mercaptobenzothiazole, 2-methylthiobenzothiazole, and the like; it is possible to suitably use, as oxazole or benzooxazole and derivatives thereof, isoxazole, anthranil, benzooxazole, 2-methylbenzooxazole, 2-phenylbenzooxazole, 2-chlorobenzooxazole, 2-benzooxazolinone, 2-mercaptobenzooxazole, and the like; it is possible to suitably use, as triazoles and derivatives thereof, 2H-1,2,3-triazole-2-ethanol, N-trimethylsilyl-1,2,4-triazole, 3-amino-5-methyl-1,2,4-triazole, 5,5'-diamino-3,3'-bis-1,2,4-triazole, 4H-1,2,4-triazole-4-propanol, 1,2-dihydroxy-5-(phenylmethyl)-3H-1,2,4-triazole-3-thione, 1,2,4-triazole-1-acetic acid, 1,2,3-triazole, 1,2,4-triazole, 1H-1,2,4-triazole-1-ethanol, 1,5-dimethyl-1H-1,2,3-triazole-4-carboxylic acid, 5-amino-1,2,4-triazole-3-carboxylic acid, 2H-1,2,3-triazole-2-acetic acid, 1,2,4-triazole-3-carboxylic acid, 1-methyl-1,2,4-triazole-3-carboxylic acid ester, 3-amino-1,2,4-triazole, 4-amino-1,2,4-triazole, 1H-1,2,3-triazole-1-ethanol, 1,2,4-triazole-3-carboxylic acid ethyl ester, 3-amino-5-mercapto-1,2,4-triazole, 4-amino-3-hydrazino-5-mercapto-1,2,4-triazole, 4-methyl-3-(methylthio)-5-phenyl-4H-1,2,4-triazole, 3-mercapto-1,2,4-triazole, 1,2-dihydroxy-5-(3-pyridinyl)-3H-1,2,4-triazole-3-thione, 1,2,4-triazole sodium salt, 1H-1,2,3-triazole-1-ethyl acetate ester, 1H-1,2,3-triazole-1-acetic acid, 2H-1,2,3-triazole-1-ethyl acetate ester, 2H-1,2,3-triazole-1-acetic acid, 1-(3-aminopropyl)-1H-1,2,3-triazole dihydrochloride, 3-amino-5-methylmercapto-1,2,4-triazole, 5-methylmercapto-1,2,3-triazole, ethyl-2-(1H-1,2,4-triazol-1-yl)acetic acid, 5-mercapto-1,2,3-triazole sodium salt, 4-(2-hydroxyethyl)-1,2,4-triazole, 5-methyl-1,2,4-triazole-3-thiol, 1-hydroxybenzotriazole, 5-methyl-1H-benzotriazole, benzotriazole sodium salt, benzotriazole-5-carboxylic acid, 2-(2'-hydroxy-5'-methylphenyl)benzotriazole, 6H,12H-benzotriazolo[2,1-a]benzotriazole, 4-methylbenzotriazole, 2(2'-hydroxy-5'-octylphenyl)benzotriazole, 2-(2'-hydroxy-3',5'-di-tert-butylphenyl)benzotriazole, 2-(3',5'-di-tert-butyl-2'-hydroxyphenyl)chloro-2H-benzotriazole, tolyltriazole sodium salt, tolyltriazole potassium salt, 1,2,3-benzotriazole, 2-(2'-hydroxy-5'-methacryloxyethylphenyl)-2H-benzotriazole, and the like.

It is possible to suitably use, as the thiophene-based compound and derivatives thereof, thiophene, 2-bromothiophene, 2-thiophenecarbonitrile, 3-dodecylthiophene, 4-dibenzothiophene-4-boric acid, tetrahydrothiophene, benzothiophene-3-boric acid, tetrahydrothiophene-1,1-dioxide, 2-(acetylamino)thiophene, 2-benzoylthiophene, 3-thiopheneacetonitrile, 2-amino-5-methylthiophene-3-carbonitrile, 4-methyl-2-thiophenecarboxylic acid, 2-chloro-3-methylthiophene, 3-[(chloroacetyl)amino]-2-thiophenecarboxylic acid methyl ester, 3-acetylthiophene, 5-chlorothiophene-2-boric acid, 5-methylthiophene-2-boric acid, 2-thiophenesulfonyl chloride, 4-bromo-2-thiophenecarboxylic acid, 3-chloromethyl-2-methylbenzothiophene, 3-formylthiophene-2-boric acid, 3-formyl-2-thiopheneboric acid, 3-chloro-4-methylthiophenecarboxylic acid methyl ester, 3-methoxythiophene, 3-aminothiophene, 4-bromothiophene-2-carboaldehyde, 2-thiopheneacetic acid, 5-methyl-2-thiophenecarboxylic acid, 2-amino-3,5-dinitrothiophene, 5-acetyl-2-thiopheneboric acid, 2-thiopheneacetonitrile, 2-(acetylamino)-3-thiophenecarboxylic acid methyl ester, 2-thiophenecarboxylic acid hydrazide, 3-methyl-2-thiophenecarboxylic acid, 5-chlorothiophene-2-carboxylic acid, 2,5-dimethyl-3-formylthiophene, 4-bromo-3-methyl-2-thiophenecarbonyl chloride, 5-chlorothiophene-2-sulfonyl chloride, 2-thiophenemethylamine, thiophene-2-methylamine, 3-chloro-6-methoxybenzothiophenecarboxylic acid, 3-methylbenzothiophene-2-carboxylic acid, 2,4-dibromothiophene, 2,3,5-tribromothiophene, 2,5-dibromothiophene, 2,5-dichlorothiophene, 2-iodothiophene, 4-bromo-2-propionylthiophene, 4-bromo-2-propylthiophene, 3-bromo-5-methyl-2-thiophenecarboaldehyde, 2,5-dichloro-3-acetylthiophene, α-(phenylmethylene)-2-thiopheneacetonitrile, thiophene-2-acetylchloride, 3-bromo-2-chlorothiophene, 4-bromo-5-(1,1-dimethylethyl)-2-thiophenecarboxylic acid, 5-acetyl-2-thiophenecarboxylic acid, 2,5-carboxythiophene, 2,5-thiophenedicarboxylic acid, 2,5-bis(methoxycarbonyl)thiophene, 2-formylthiophene-3-boric acid, 3-formyl-4-thiopheneboric acid, 5-bromothiophene-2-carboaldehyde, 2,5-diacetylthiophene, thiophene-3-carboaldehyde, 3-hydroxy-3-thiophenecarboxylic acid methyl ester, thiophene-2-carboxylic acid, 2-thiophenecarbonyl chloride, 5-bromo-4-methyl-2-thiophenecarboxylic acid, 2,5-dichlorothiophene-3-sulfonyl chloride, 2-thiopheneethyl acetate ester, thiophene-2-carboxamide, 3-methyl-2-thiophenecarboaldehyde, 3-thiopheneacetic acid methyl ester, 2-iodomethylthiophene, 4-chlorothiophene-2-carboxylic acid, 2-nitrothiophene, 3-methyl-2-thiophenecarbonyl chloride, and the like.

The total concentration of at least one azole-based compound and/or thiophene-based compound including these compounds is suitably within a range of 0.01 to 50 g/L, and more suitably 0.05 to 10 g/L. When the concentration in the plating solution is too low, the effect serving as a brightener is not exerted. Even when the concentration is too high, the effect reaches a peak and it causes poor cost-effectiveness.

### 4. Surfactant

The silver plating bath used in the present invention can further contain, as a bath component, a surfactant. Inclusion of the surfactant enables extension of the current density range where semi-glossy or glossy appearance is obtained. Here, the surfactant can also include a polymer compound having surface activity.

It is possible to appropriately use, as a compound which is suitably used as the surfactant, known cationic surfactants, anionic surfactants, nonionic surfactants, and amphoteric surfactant alone or in combination.

Examples of suitable surfactant include cationic surfactants such as alkyltrimethylammonium halide, dialkyldimethylammonium halide, alkyldimethylbenzylammonium halide, alkylamine salt, cationic cellulose derivative, polyvinylimidazole quaternary salt, and the like.

Examples of anionic surfactants include alkyl (or formalin condensate)-β-naphthalenesulfonic acid (or salts thereof), fatty acid soap, alkyl sulfonate, alkylbenzene sulfonate, alkyl diphenyl ether disulfonate, alkylsulfuric acid ester salt, polyoxyethylene alkyl ether sulfuric acid ester salt, polyoxyethylene alkylphenol ether sulfuric acid ester salt, higher alcohol phosphoric acid monoester salt, polyoxyalkylene alkyl ether phosphoric acid (salt), sarcosine derivative, methylalanine derivative, fatty acid alkyl taurate, alkyl sulfosuccinate, dialkyl sulfosuccinate, polyoxyethylene alkyl sulfosuccinate, polycarboxylic acid-based polymer, polysulfonic acid-based polymer, and the like.

Examples of nonionic surfactants include polyoxyalkylene alkyl ether (or ester), polyoxyalkylene phenyl (or alkylphenyl) ether, polyoxyalkylene naphthyl (or alkylnapthyl) ether, polyoxyalkylene styrenated phenyl ether (or a polyoxyalkylene chain is further added to the phenyl group), polyoxyalkylene bisphenol ether, polyoxyethylene-polyoxypropylene block polymer, polyoxyalkylene sorbitan fatty acid ester, polyoxyalkylene sorbitol fatty acid ester, polyethylene glycol fatty acid ester, polyoxyalkylene glycerin fatty acid ester, polyoxyalkylenealkylamine, polyoxyalkylene condensate adduct of ethylenediamine, polyoxyalkylene fatty acid amide, polyoxyalkylene castor (and/or hardened castor oil) oil, polyoxyalkylene alkyl phenyl formalin condensate, glycerin (or polyglycerin) fatty acid ester-based surfactant, pentaerythritol fatty acid ester, sorbitan mono (sesqui, tri) fatty acid ester-based surfactant, higher fatty acid mono(di)ethanolamide, alkyl alkylolamide, oxyethylenealkylamine, and the like.

Examples of amphoteric surfactant include alkylamino fatty acid salt, alkyl betaine, aliphatic amide propyl betaine, fatty acid amide propyl hydroxysulfobetaine, aliphatic amide propyl dimethylamine oxides, imidazolium betaine, alkylamine oxide, ethylenediamine derivative, and the like.

The amount of at least one surfactant including them is appropriately selected, and the total amount used is within a range of about 0.001 to 50 g/L, suitably 0.005 to 50 g/L, and more suitably 0.01 to 30 g/L. In the case of a small additive amount, the effect is not exhibited. Even in the case of a large amount, not only the effect reaches a peak, but also more bubbles occur to cause hindrance to workability.

### 5. Acid and/or Complexing Agent

The silver plating bath of the present invention can also contains a common acid, in addition to the above benzoic acid derivatives, so that silver ions can stably exist without being hydrolyzed. There is no particular limitation on kind of the common acid and it is possible to use organic sulfonic acids, for example, alkanesulfonic acids such as methanesulfonic acid and propanesulfonic acid, and alkanolsulfonic acids such as isethionic acid and 2-hydroxypropane-1-sulfonic acid; and inorganic acids such as hydrochloric acid, nitric acid, sulfuric acid, phosphoric acid, and perchloric acid. There is no particular limitation on the amount used, and the total amount is within a range of about 0.001 to 300 g/L, and more suitably 0.01 to 100 g/L.

It is also possible to contain a complexing agent in the method in which silver ions are stabilized. Examples thereof include, but are not limited to, halides such as iodide, bromide, and chloride; amine-based compounds such as ammonia, triethanolamine, diethylenetriamine, monoethanolamine, ethylenediamine, ethylenediaminetetraacetic acid, and nitrilotriacetic acid; aliphatic carboxylic acids such as citric acid, oxalic acid, lactic acid, tartaric acid, and gluconic acid; nitrogen-containing heterocyclic compounds such as succinimide, hydantoin, 5,5-dimethylhydantoin, pyridine, and 2-aminopyridine; and sulfur-containing compounds such as thiourea, thioglycolic acid, thiodiglycolic acid, thiosulfuric acid, sulfurous acid, and thiocyanic acid. There is no particular limitation on the amount used, and the total amount is within a range of about 5 to 300 g/L, and more suitably 10 to 200 g/L.

A cyanide compound has hitherto been used, in addition to the above-mentioned complexing agent. In an embodiment, a silver plating bath of the present invention does not need a cyanide compound (i.e. concentration of 0 g/L), or does not substantially contain the cyanide compound. Here, "does not substantially contain" means that the content of the cyanide compound is low enough to need no waste water treatment in view of environmental reference. Typically, the content is 0.1 g/L or less. In an embodiment, the silver plating bath of the present invention contains no cyanide compound. The "cyanide compound" as used herein refers to a compound which generates cyanide ions (CN⁻) as anions when dissolved.

In an embodiment, it is also possible to use the acid in combination with the complexing agent in the silver plating bath of the present invention.

### 6. Others

The silver plating bath of the present invention can further appropriately contain common grain refiner, leveling agent, brightener, and the like, which are used in a silver electroplating solution alone or in combination. The amount is commonly 0.01 to 50 g/L, and more suitably 0.1 to 30 g/L.

When plating is performed using the silver plating bath of the present invention, the bath temperature is suitably 10 to 50°C, and more suitably 15 to 40°C. The current density is suitably 0.1 to 100 A/dm², and more suitably 0.5 to 50 A/dm². The plating time can optionally depending on the desired plate thickness. In some cases, it is possible to appropriately perform the operation of stirring a plating solution or applying very strong jet flow toward a substrate surface.

When plating is performed using a silver plating bath of the present invention, there is no particular limitation on the pH of the plating bath, and the pH may be lower than 1, or 4 to 7, or 7 to 12. When the pH is in a strong acid range of lower than 1, or neutral or alkaline range of 7 to 12, the effect is particularly recognized.

A silver electroplated product is efficiently produced by using the above-mentioned silver plating bath of the present invention. The plated product may be further subjected to a known coating treatment. It is well known to persons skilled in the art to maintain intrinsic beautiful appearance and functionality of silver over a long period of time by forming various discoloration-preventive films on a silver plating surface since silver undergoes discoloration in atmospheric air. Specific examples of the method of a coating treatment include a method in which an organic compound and a resin-based material are formed on a silver surface; method in which other metals such as iridium and rhodium are formed; or a method in which a so-called chemical conversion film is formed by treating with a chromate. It is possible to appropriately select, as the treatment method, a dipping method, a coating method, a plating/electrolytic method, a sputtering/vacuum deposition method, and the like.

### [Examples]

The present invention will be described in detail by way of Examples, but the present invention is not limited to the following Examples and various variations can be made without departing from the technical idea of the present invention.

According to the compositions shown in Examples 1 to 12 of Table 1, a plating solution was prepared.

Using a Hull cell copper plate as a substrate, the substrate was subjected to electrolytic degreasing, pickling, and strike silver plating in this order. Using each of plating solutions with the compositions shown in Examples 1 to 12 of Table 1, Hull cell test of the substrate was performed. Hull cell test was performed under the conditions of a plating bath temperature of 25°C, an electric current of 3 A, and a plating time of 1 minute without stirring. The water washing step is included between the respective steps.

With respect to the obtained Hull cell panel, gloss and used current density range were evaluated. Gloss was measured by a densitometer ND-11 manufactured by Nippon Denshoku Industries Co., Ltd., and the measurement was made of the portion where maximum gloss was obtained in the Hull cell panel. The applicable current density range was evaluated according to the following criteria. The case where a theoretical primary current density of an appearance portion having gloss of 0.2 or more in the Hull cell panel is within a range of 3 A/dm² or more was rated "A", the case where a theoretical primary current density is within a range of 1 A/dm² or more and less than 3 A/dm² was rated "B", and the case where a theoretical primary current density is within a range of less than 1 A/dm² was rated "C".

Examples 1, 1A, 1B, and 7 are examples of a benzoic acid derivative having a hydroxyl group as the substituent. Examples 2, 2A, 2B, 4, 4A, 4B, 4C, 5, 5A, 5B, 5C, 5D, 5E, 6, 6A, and 6B are examples of a benzoic acid derivative having a sulfonic acid group as the substituent. Examples 3, 3A, 3B, and 8 are examples of a benzoic acid derivative having an amino group as the substituent. Examples 4, 4A, 4B, 4C, 5, 5A, 5B, 5C, 5D, 5E, 6, 6A, 6B, 11, 11A, 11B, and 12 are examples of a benzoic acid derivative having a carboxyl group as the substituent. Examples 9, 9A, 9B, 10, 10A, and 10B are examples of a benzoic acid derivative having an aldehyde group as the substituent. In all examples, excellent results were obtained with respect to gloss, and an applicable current density range became wide.

Examples in which a specific surfactant is further added include Examples 5, 5A, 5B (nonionic), 5C (anionic), 5D (cationic), and 5E (amphoteric). As is apparent from a comparison with Example 4C, usable current density range became wide in all examples.

Examples in which a specific azole-based compound is added include Examples 6, 6A, and 6B. As is apparent from a comparison with Examples 4C, gloss was improved. Examples in which a thiophene-based compound is added include Examples 10, 10A, and 10B. As is apparent from a comparison with Example 9, gloss was improved.

As is apparent from the results of Table 1, in a plating solution containing a specific benzoic acid derivative in the present invention, it is possible to obtain a plating film which exhibits wide applicable current density range and semi-glossy or glossy appearance.

### Comparative Examples

In the same manner as in Comparative Examples 1 to 7 of Table 1, plating solutions were prepared. The plating method and the evaluation method were the same as in Examples.

Regarding Comparative Examples 1 to 3, although the plating solution contains a benzoic acid derivative substituted with only the substituent other than an aldehyde group, a carboxyl group, an amino group, a hydroxyl group, or a sulfonic acid group, only a plating appearance having non-glossy appearance was obtained. Regarding Comparative Example 7, although the plating solution contains a benzoic acid derivative having one carboxyl group, the same results as in Comparative Examples 1 to 3 were obtained. Regarding Comparative Examples 4 to 6, although the bath containing an aliphatic carboxylic acid (Comparative Example 4: oxalic acid, Comparative Example 5: citric acid), or a nitrogen-containing heterocyclic compound substituted with a carboxyl group (Comparative Example 6: nicotinic acid), gloss was slightly recognized only in the case of using the bath containing citric acid. However, gloss shows yellowish shade and the applicable current density range was drastically narrow, and thus the plating solutions corresponded to the level unsuited for industrial uses.

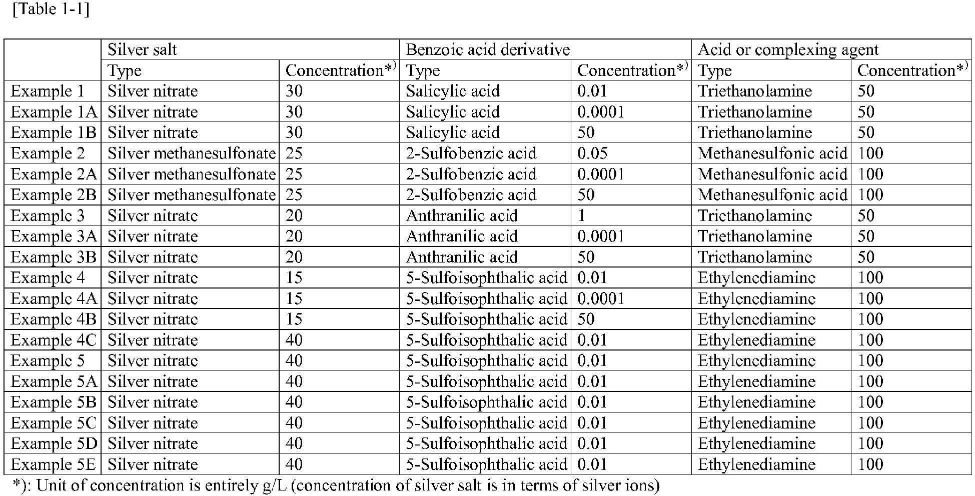

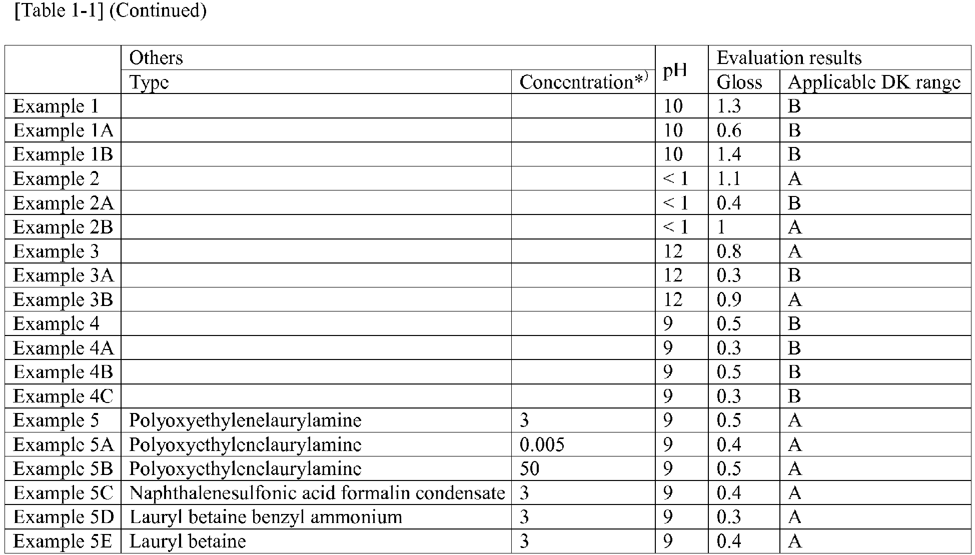

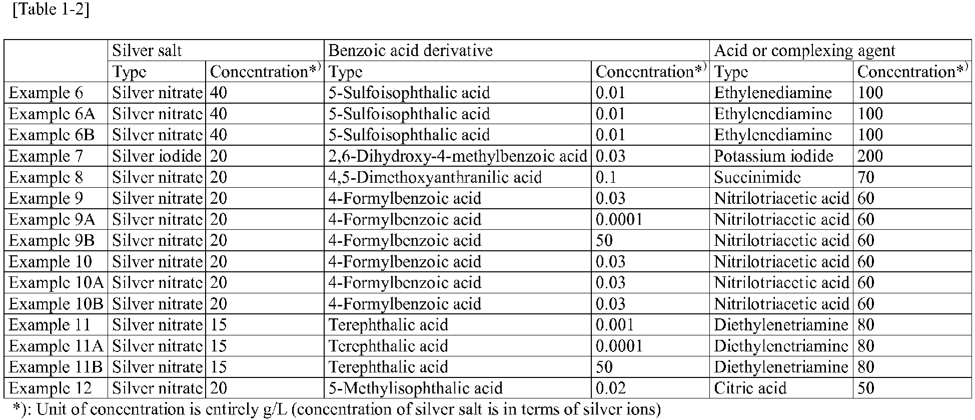

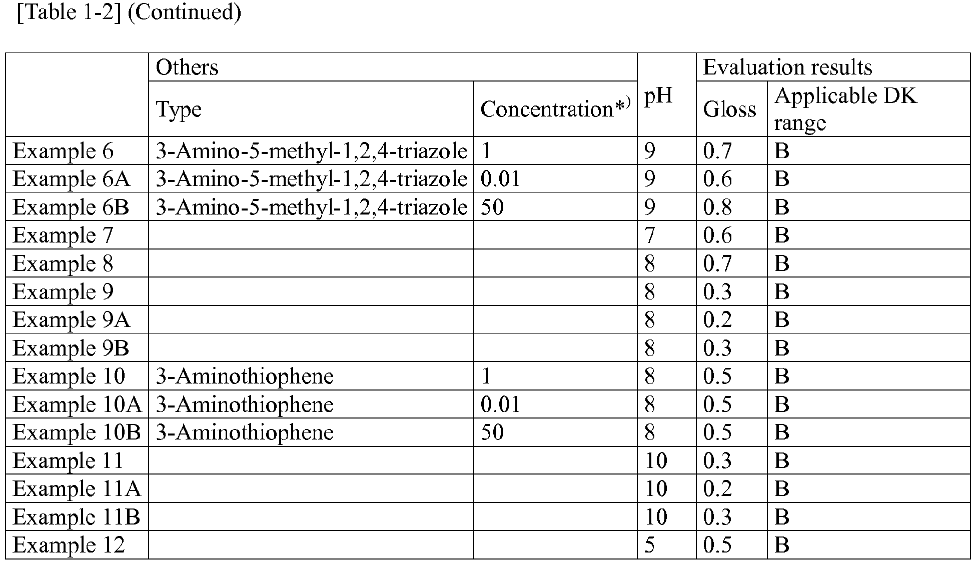

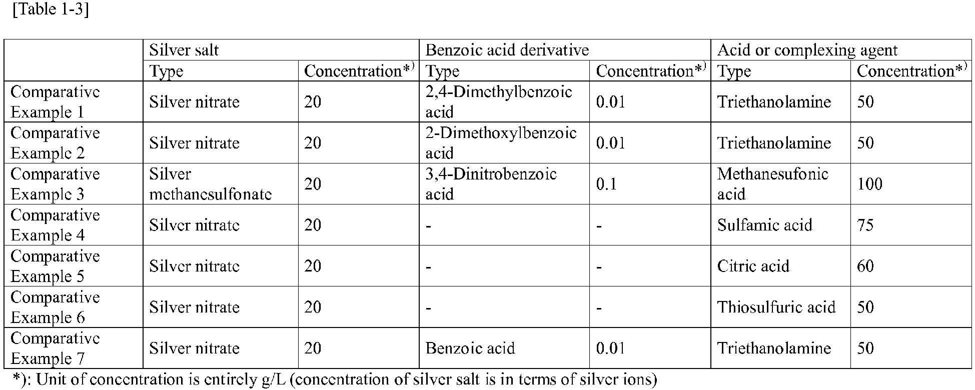

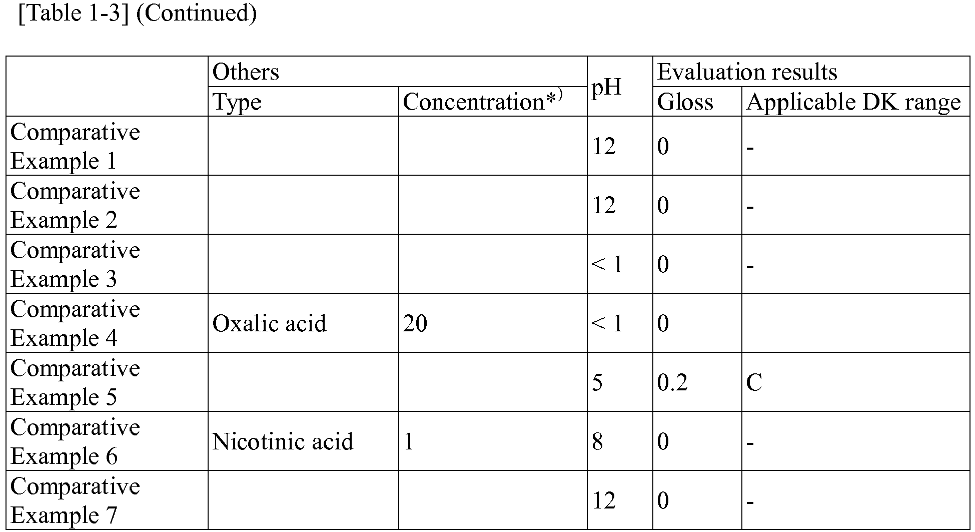

## Claims

1. A silver electroplating solution which is an aqueous solution comprising:
(A) at least one soluble silver compound,
(B) at least one benzoic acid derivative or a salt of the derivative, and
(C) at least one acid and/or complexing agent,
wherein the benzoic acid derivative is represented by the following general formula I: 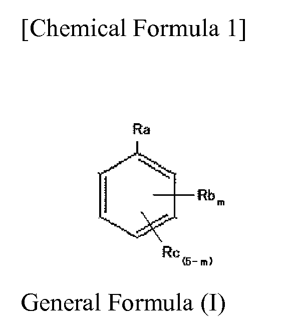 wherein
m is 1, 2, 3, 4, or 5,
Ra is a carboxyl group,
Rb each is independently selected from an aldehyde group, a carboxyl group, an amino group, a hydroxyl group, or a sulfonic acid group,
Rc each independently represents hydrogen or an optional substituent, and
one or more oxygen(s) or CH₂ (s) may be introduced into the bond between Ra(s) or Rb and a benzene ring.

2. The plating solution according to claim 1, which does not substantially contain a cyanide compound.

3. The plating solution according to claim 1 or 2, which further contains at least one azole-based compound and/or thiophene-based compound.

4. The plating solution according to any one of claims 1 to 3, which further contains at least one surfactant.

5. The plating solution according to claim 4, wherein the surfactant is a nonionic surfactant.

6. The plating solution according to any one of claims 1 to 5, wherein the total concentration of the benzoic acid derivative or a salt of the derivative is 0.0001 g/L or more.

7. The plating solution according to claim 3, wherein the total concentration of the azole-based compound and/or thiophene-based compound is 0.01 g/L or more.

8. The plating solution according to claim 4, wherein the total concentration of the surfactant is 0.001 g/L or more.

9. A silver electroplating method, which comprises using the plating solution according to any one of claims 1 to 8.

10. A method for producing a silver electroplated product by using the plating solution according to any one of claims 1 to 8.

11. A silver electroplated product produced by using the plating solution according to any one of claims 1 to 8.

12. The method or plated product according to any one of claims 9 to 11, wherein silver electroplating is performed using the plating solution, followed by subjecting to any one or more of the following coating treatments:
- a treatment for forming a film of an organic compound or a resin-based material;
- a treatment for forming a film of metal other than silver; and
- a treatment for forming a chromic acid chemical conversion film.
